Europäisches Patentamt

European Patent Office

Office européen des brevets

(19)

(11)  EP 0 883 256 B1

(12)  **FASCICULE DE BREVET EUROPEEN**

(45)  Date de publication et mention
de la délivrance du brevet:
**23.08.2000  Bulletin 2000/34**

(51)  Int Cl.$^7$: **H04B 10/18**

(21)  Numéro de dépôt: **98401334.2**

(22)  Date de dépôt: **04.06.1998**

(54)  **Système de transmission à fibre optique à signaux solitons à multiplexage de longueur d'onde et à absorbants saturables.**

Soliton faseroptisches Wellenlängenmultiplexiertes Übertragungssystem mit sättigbarem Absorber

Soliton WDM optical fibre transmission system with saturable absorbers

(84)  Etats contractants désignés:
**AT BE CH DE ES FR GB IT LI NL SE**

(30)  Priorité:  **05.06.1997  FR 9706969**

(43)  Date de publication de la demande:
**09.12.1998  Bulletin 1998/50**

(73)  Titulaire: **ALCATEL**
**75008 Paris (FR)**

(72)  Inventeur: **Desurvire, Emmanuel**
**91680 Bruyeres Le Chatel (FR)**

(74)  Mandataire: **Lamoureux, Bernard et al**
**Compagnie Financiere Alcatel,**
**Département D.P.I.,**
**30, avenue Kléber**
**75016 Paris (FR)**

(56)  Documents cités:
- ATKINSON D ET AL: "INCREASED AMPLIFIER SPACING IN A SOLITON SYSTEM WITH QUANTUM-WELL SATURABLE ABSORBERS AND SPECTRAL FILTERING" OPTICS LETTERS, vol. 19, no. 19, 1 octobre 1994, pages 1514-1516, XP000466523
- ESSIAMBRE R -J ET AL: "CONTROL OF SOLITON-SOLITON AND SOLITON-DISPERSIVE WAVE INTERACTIONS IN HIGH BIT-RATE COMMUNICATION SYSTEMS" ELECTRONICS LETTERS, vol. 31, no. 17, 17 août 1995, pages 1461-1463, XP000528981
- MASAYUKI MATSUMOTO ET AL: "STABLE SOLITON TRANSMISSION IN THE SYSTEM WITH NONLINEAR GAIN" JOURNAL OF LIGHTWAVE TECHNOLOGY, vol. 13, no. 4, 1 avril 1995, pages 658-665, XP000513582
- LECLERC O ET AL: "ASSESSMENT OF 80GBIT/S (4X20GBIT/S) REGENERATED WDM SOLITON TRANSOCEANIC TRANSMISSION" ELECTRONICS LETTERS, vol. 32, no. 12, 6 juin 1996, pages 1118-1119, XP000620711

EP 0 883 256 B1

## Description

La présente invention a pour objet un système de transmission à fibre optique à signaux solitons et à multiplexage de longueur d'onde, dans lequel les différentes longueurs d'onde du multiplex sont choisies de sorte à assurer, sur un intervalle donné, un glissement relatif entre les différents canaux sensiblement égal à un multiple du temps bit.

Elle concerne également un procédé de transmission dans un tel système.

La transmission d'impulsions solitons ou solitons dans la partie d'une fibre optique à dispersion anormale est un phénomène connu. Les solitons sont des signaux impulsionnels de forme $sech^2$. Avec cette forme d'impulsion, la non-linéarité dans la partie correspondante de la fibre compense la dispersion du signal optique. La transmission des solitons est modélisée de façon connue par l'équation de Schrödinger non-linéaire.

Divers effets limitent la transmission de telles impulsions, comme la gigue induite par l'interaction des solitons avec le bruit présent dans le système de transmission, décrite par exemple dans l'article de J. P. Gordon et H. A. Haus. Optical Letters, vol. 11 n° 10 pages 665-667. Cet effet, appelé effet Gordon-Haus ou gigue Gordon-Haus, impose une limite théorique à la qualité ou au débit des transmissions par solitons. Une autre limite est donnée par les fluctuations d'amplitude introduites par le bruit des amplificateurs.

Pour arriver à dépasser ces limites, il est possible d'utiliser une modulation synchrone des signaux solitons, à l'aide de modulateurs semi-conducteurs. Cette technique limite intrinsèquement le débit de la liaison solitons, du fait de la limite supérieure de la bande passante des modulateurs semi-conducteurs. Il a aussi été proposé des systèmes de filtres guidants glissants, permettant de contrôler la gigue des solitons transmis, voir par exemple EP-A-0 576 208.

Il a aussi été proposé, pour assurer la régénération du signal sur la ligne, d'utiliser l'effet Kerr dans des modulateurs synchrones d'amplitude ou de phase de type interférométrique. Ces techniques nécessitent des composants haute fréquence, d'où l'intérêt des approches tout-optiques. Cette approche est limitée, en coût, d'une part par le nombre de modulateurs en ligne requis, avec leur électronique associée, et d'autre part, dans les applications sous-marines envisagées, par la nécessité de qualifier les composants.

Il a enfin été proposé, pour assurer la régénération signaux solitons, d'utiliser des absorbants saturables. Cette solution est soumise à trois limitations. D'une part, la réponse temporelle des absorbants saturables n'apparaît pas assez rapide pour les applications à haut débits; d'autre part, le contrôle de la gigue par absorbants saturables n'est pas aussi efficace que dans le cas de la modulation synchrone. Enfin. les absorbants saturables ne paraissent pas compatibles avec la propagation en multiplexage de longueur d'onde, du fait de la non-synchronicité des canaux.

Un article de D. Atkinson et al., Optics Letters, vol. 19 n° 19, pages 1514-1516 décrit une simulation théorique d'un système de transmission à signaux solitons, utilisant des absorbants saturables à puits quantique et un filtrage spectral. Dans cet article est démontrée théoriquement la possibilité de transmission sur une distance de 9000 km de signaux solitons non multiplexés, avec des régénérateurs régulièrement espacés et distants de 100 km. Chaque régénérateur comprend un amplificateur, un absorbant saturable à puits quantique multiple ou MQW (acronyme de l'anglais "multiple well quantum"), et un filtre à bande étroite. Cet article précise que les "spectres d'absorption des MQW limitent leur utilisation dans les systèmes à multiplexage de longueurs d'onde". Il est seulement suggéré que certains matériaux à absorbants saturables peuvent en principe présenter une longueur d'onde spécifique, et être donc compatibles avec un multiplexage de longueur d'ondes.

Un article de R.J. Essiambre et G.P. Agrawal, J. Opt. Soc. Am. B/vol. 12 n° 12, pages 2420-2425 propose une description théorique d'un système de transmission à signaux solitons brefs, en régime de propagation quasi-adiabatique. Le système de transmission simulé comprend des régénérateurs incluant un amplificateur à largeur de bande limitée, un absorbant saturable rapide, et le cas échéant, un filtre fréquentiel. L'article explique que l'absorbant saturable permet de réduire les instabilités de résonance, et empêche la production de solitons secondaires. Plus précisément, l'article propose de compenser la diffusion Raman à l'intérieur de chaque impulsion, qui provoque un décalage de la fréquence d'un soliton vers le bas, par un décalage en fréquence vers le haut, dans chaque régénérateur. Cette solution n'est pas transposable à des systèmes de transmission à multiplexage de longueur d'onde, compte tenu de l'importance d'une faible largeur de bande pour les amplificateurs, et des relations entre la fréquence des solitons et l'intervalle entre les répéteurs.

Par ailleurs, pour augmenter le débit des systèmes de transmission à fibre optique à signaux solitons, il a aussi été proposé d'utiliser un multiplexage de longueur d'onde (en anglais "wavelength division multiplexing" ou WDM). Dans ce cas, il est considéré comme avantageux d'utiliser des filtres guidants glissants du type Fabry Perot, qui sont entièrement compatibles avec des signaux multiplexés en longueur d'onde. En revanche, l'utilisation de modulateurs synchrones ou d'absorbants saturables pour la régénération de signaux solitons multiplexés en longueur d'onde est problématique, du fait de la différence de vitesse de groupe entre les signaux des différents canaux.

Un article de E. Desurvire, O. Leclerc et O. Audouin. Optics Letters, vol. 21, n° 14, pages 1026-1028 décrit un schéma d'allocation des longueurs d'ondes, qui soit compatible avec l'utilisation de modulateurs synchrones. Cet article propose d'allouer des longueurs d'ondes aux différents canaux du multiplex de telle sorte que, pour des intervalles donnés entre les répéteurs, les signaux des différents canaux, ou plus exactement les temps bits des différents canaux du multiplex soient sensiblement synchronisés en arrivant aux répéteurs. On permet ainsi une modulation synchrone en ligne de tous les canaux, à des intervalles donnés, à l'aide de modulateurs synchrones discrets. Un article plus détaillé décrit les différentes possibilités d'allocation en longueurs d'onde dans le cas le plus général, soit avec ou sans compensation de pente de dispersion (O. Leclerc, E. Desurvire, et O. Audouin. Optical Fiber Technologies, vol. 3 n° 2, Avril 1997, Academic Press Ed., 1997). La technique générale d'allocation des longueurs d'ondes du multiplex est aussi décrite dans la demande de brevet français 9600732 du 23 janvier 1996 au nom de Alcatel Submarine Networks.

D'autres procédés ou dispositifs, comme par exemple ceux décrits dans les demandes de brevet français 9701476 du 10 février 1997, au nom de Alcatel Alsthom Compagnie Générale d'Electricité permettent d'obtenir le même résultat, à savoir une synchronisation des temps bits des différents canaux du multiplex en certaines positions le long du système de transmission. Dans cette demande de brevet, il est proposé d'utiliser des lignes à retard ou des dispositifs équivalents pour resynchroniser les canaux du multiplex.

La présente invention propose une solution originale et simple au problème de la modulation de signaux solitons multiplexés en longueur d'onde. Elle permet d'éviter les inconvénients mentionnés plus haut des dispositifs de modulation synchrone.

Plus précisément, l'invention propose un système de transmission à fibre optique à signaux solitons et à multiplexage de longueur d'onde, dans lequel les temps bit des différents canaux ($\lambda_1$ à $\lambda_n$) du multiplex sont sensiblement synchrones en au moins un point, qui est caractérisé par au moins un absorbant saturable disposé audit point.

Avantageusement, la fenêtre spectrale utile de l'absorbant saturable recouvre les différents canaux du multiplex. On peut prévoir que le temps de réponse de l'absorbant saturable est inférieur à une petite fraction du temps bit, de préférence inférieur à 10% du temps bit.

Dans un mode de réalisation, les différentes longueurs d'ondes des canaux du multiplex sont choisies de sorte à assurer, sur un intervalle $Z_R$ donné, un glissement relatif entre les différents canaux sensiblement égal à un multiple du temps bit 1/B, le système comprenant au moins deux absorbants saturables séparés d'une distance multiple dudit intervalle $Z_R$.

Dans ce cas, pour toute longueur d'onde $\lambda_i$ du multiplex, la différence $\delta\tau_i$ entre le glissement par unité de longueur sur le canal i et sur le premier canal satisfait avantageusement la relation

$$(k_i.T - T/4) < \delta\tau_i.Z_R < (k_i.T + T/4)$$

avec $k_i$ un entier dépendant du canal, et T le temps bit.

Dans un autre mode de réalisation, le système comprend des moyens de synchronisation à lignes à retard optiques, compensant les différences entre les temps de groupe associés aux différents canaux, de sorte à assurer la synchronicité des canaux au moins audit point.

On peut prévoir des moyens d'émission ou de récupération dans le système de transmission d'une horloge, la puissance de l'horloge étant choisie de sorte à assurer une saturation complète ou quasi-complète dudit absorbant saturable pendant les impulsions d'horloge.

Cette horloge est avantageusement formée d'une série périodique de solitons présentant chacun une largeur temporelle comprise entre 0,20 et 0,33 fois la période du signal.

En outre, l'absorbant saturable peut comprendre un amplificateur à gain saturable, de préférence un amplificateur à semi-conducteurs.

Le système peut aussi présenter des moyens d'émission ou de récupération dans le système de transmission d'une horloge noire, la puissance de l'horloge étant choisie de sorte à assurer une saturation complète ou quasi-complète du gain de l'amplificateur en dehors des impulsions d'horloge.

Cette horloge noire est avantageusement formée d'une série périodique de solitons noirs présentant chacun une largeur temporelle comprise entre 0,20 et 0,33 fois la période du signal.

L'invention propose aussi un procédé de transmission dans un système à fibre optique à signaux solitons et à multiplexage de longueur d'onde, dans lequel les temps bit des différents canaux ($\lambda_1$ à $\lambda_n$) du multiplex sont sensiblement synchrones en au moins un point, caractérisé par au moins une étape de modulation synchrone des signaux des canaux du multiplex à l'aide d'un absorbant saturable disposé audit point.

Avantageusement, la fenêtre spectrale utile de l'absorbant saturable recouvre les différents canaux du multiplex.

Le temps de réponse de l'absorbant saturable peut être inférieur à une petite fraction du temps bit, de préférence inférieur à 10% du temps bit.

Dans un mode de réalisation, les différentes longueurs d'ondes des canaux du multiplex sont choisies de sorte à assurer, sur un intervalle $Z_R$ donné, un glissement relatif entre les différents canaux sensiblement égal à un multiple du temps bit 1/B, et le procédé comprend au moins étapes de régénération à l'aide d'absorbants saturables séparés d'une distance multiple dudit intervalle $Z_R$.

Dans ce cas, pour toute longueur d'onde $\lambda_i$ du multiplex, la différence $\delta\tau_i$ entre le glissement par unité de longueur sur le canal i et sur le premier canal satisfait de préférence la relation

$$(k_i.T - T/4) < \delta\tau_i.Z_R < (k_i.T + T/4)$$

avec $k_i$ un entier dépendant du canal, et T le temps bit.

Dans un autre mode de réalisation, le procédé comprend au moins une étape de synchronisation des temps bit des différents canaux du multiplex, grâce à des moyens de synchronisation à lignes à retard optiques, compensant les différences entre les temps de groupe associés aux différents canaux.

Le procédé comprend aussi de préférence l'émission ou la récupération dans le système de transmission d'une horloge, la puissance de l'horloge étant choisie de sorte à assurer une saturation complète ou quasi-complète dudit absorbant saturable pendant les impulsions d'horloge.

Dans ce cas, l'horloge peut être formée d'une série périodique de solitons présentant chacun une largeur temporelle comprise entre 0,20 et 0,33 fois la période du signal

On peut prévoir que l'absorbant saturable comprend un amplificateur à gain saturable, de préférence un amplificateur à semi-conducteurs.

Dans ce cas, le procédé comprend avantageusement l'émission ou la récupération dans le système de transmission d'une horloge noire, la puissance de l'horloge étant choisie de sorte à assurer une saturation complète ou quasi-complète du gain de l'amplificateur en dehors des impulsions d'horloge.

L'horloge noire est de préférence formée d'une série périodique de solitons noirs présentant chacun une largeur temporelle comprise entre 0,20 et 0,33 fois la période du signal.

D'autres caractéristiques et avantages de l'invention apparaîtront à la lecture de la description qui suit de modes de réalisation de l'invention, donnée à titre d'exemple et en référence aux dessins annexés qui montrent:

- figure 1 une représentation schématique d'un système de transmission selon un premier mode de réalisation de l'invention;
- figure 2, l'allure des signaux solitons sur quatre canaux du système de la figure 1, à l'arrivée sur un régénérateur;
- figure 3, l'allure de la transmission en fonction du temps dans un régénérateur à absorbant saturable selon l'invention;
- figure 4 l'allure des signaux solitons de la figure 2 après passage dans le régénérateur de la figure 2.

L'invention propose d'utiliser des absorbants saturables pour un système de transmission à fibre optique à signaux solitons et à multiplexage de longueur d'onde, dans lequel les canaux solitons sont synchronisés en au moins un point, et de préférence sont synchronisés à intervalles réguliers; pour cela, on peut utiliser les solutions d'allocation de longueurs d'onde ou de lignes à retard décrites plus haut. Plus généralement, on peut utiliser toute solution assurant une synchronisation des canaux au point de modulation.

Dans la mesure où les canaux sont synchronisés, l'absorbant saturable peut assurer la régénération des signaux des différents canaux, sans qu'il soit nécessaire de prévoir de démultiplexage. Puisque le débit d'un canal est inférieur au débit de la liaison, le problème du temps de réponse de l'absorbant saturable ne se pose plus de façon aussi aiguë. Le temps de réponse est simplement avantageusement inférieur à une petite fraction, par exemple 10%, du temps bit du signal.

Pour la mise en oeuvre de l'invention, on peut choisir un schéma d'allocation de longueurs d'ondes assurant, à intervalles réguliers $Z_R$ le long de la fibre, un glissement relatif entre les différents canaux sensiblement égal à un multiple du temps bit. Ceci peut s'exprimer, pour chaque canal, par la formule:

$$(k_i.T - T/4) < \delta\tau_i.Z_R < (k_i.T + T/4)$$

où T est le temps bit, $k_i$ un entier dépendant du canal, et $\delta\tau_i$ le glissement du canal i par rapport au canal 1. Cette formule traduit le fait qu'à des intervalles $Z_R$, les décalages entre les différents canaux provoqués par le glissement sont, à un quart de temps bit près, des multiples entiers du temps bit. On assure ainsi une coïncidence exacte ou quasi exacte des temps bits avec un intervalle de $Z_R$, dans la mesure où les temps bits coïncident exactement ou quasi exactement à l'émission

On pourra notamment utiliser les schémas d'allocation des longueurs d'onde décrit dans les articles de E. Desurvire et al. et O. Leclerc et al. mentionnés plus haut, auquel on se reportera pour plus de précisions quant à ce sujet. Bien entendu, d'autres schémas d'allocation des longueurs d'onde, ou encore l'emploi de lignes à retard sont possibles, et permettent, en termes de synchronicité des différents canaux du multiplex, d'atteindre le même résultat.

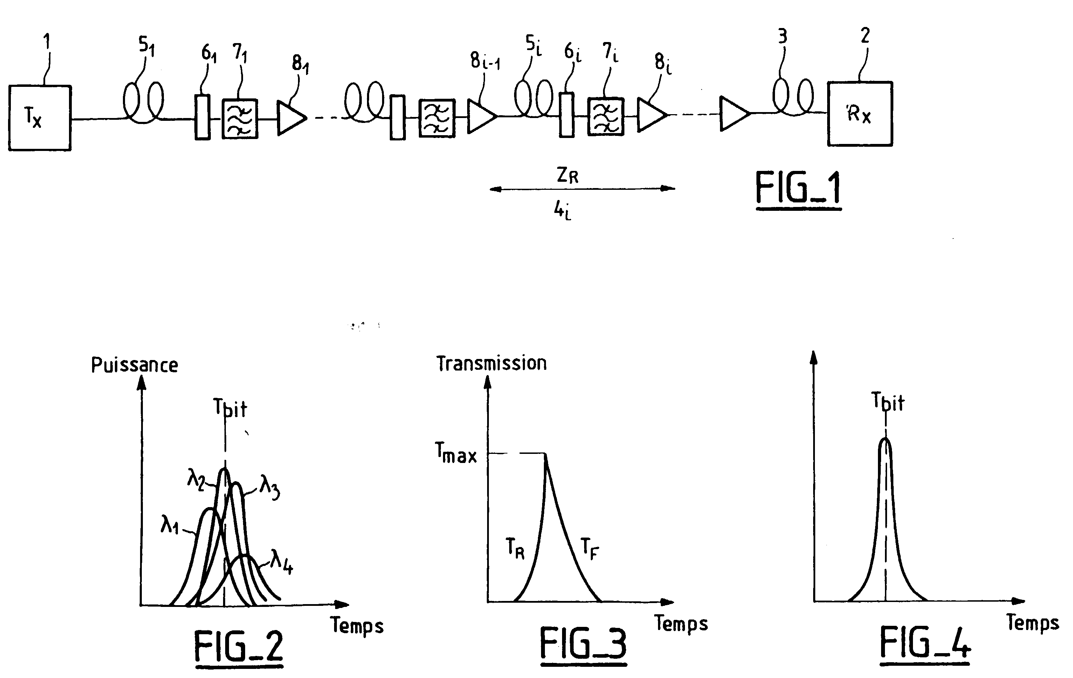

La figure 1 montre un premier mode de réalisation de l'invention, dans le cas où l'on utilise pour la modulation optique des absorbants saturables, par exemple à base de matériaux semiconducteurs ou à fibre fortement non-linéaire. Le système de transmission de la figure 1 comprend un émetteur Tx 1, un récepteur Rx 2 relié à un tronçon de fibre 3, et n tronçons $4_i$, i= 1 à n. L'émetteur 1 émettant vers le premier tronçon i = 1 des impulsions solitons, dans différents canaux d'un multiplex de longueur d'onde, à des longueurs d'onde $\lambda_1$ à $\lambda_n$. Les différentes longueurs d'onde sont choisies suivant un schéma d'allocation des fréquence assurant, pour un intervalle $Z_R$ donné, un glissement relatif entre les différents canaux sensiblement égal à un multiple du temps bit. Le dernier tronçon i = n est relié à la fibre 3 qui transmet les impulsions solitons au récepteur 3.

Chaque tronçon $4_i$ comprend une longueur de

fibre $5_i$, dont la sortie est reliée à un absorbant saturable $6_i$; la sortie de l'absorbant saturable constitue l'entrée d'un filtre $7_i$, dont la sortie est reliée à un amplificateur $8_i$; la sortie de l'amplificateur est reliée à la fibre $5_{i+1}$ du tronçon suivant, ou pour le tronçon n, à la fibre 3. La longueur d'un tronçon correspond de préférence à l'intervalle $Z_R$, de sorte à pouvoir procéder à une modulation à l'extrémité de chacun des tronçons, si nécessaire.

L'absorbant saturable peut être choisi parmi une variété de composants : guide ou optique libre, matériaux semiconducteurs, par exemple puits quantiques, ou cellule ou fibre hautement non linéaire en transmission.

De tels absorbants saturables présentent avantageusement une fenêtre spectrale utile de plusieurs nanomètres, de façon à pouvoir recouvrir les différents canaux d'un multiplex en longueur d'onde.

L'amplificateur peut être un amplificateur de tout type connu, et par exemple un amplificateur à fibre dopée, comme un amplificateur à fibre dopée à l'Erbium (acronyme EFDA en langue anglaise).

Il est possible de prévoir un dispositif de modulation à chaque intervalle $Z_R$, i.e. dans le cas de la figure 1, pour chaque tronçon. Il est clair que ceci n'est pas obligatoire. On peut aussi faire varier la position relative de l'amplificateur $8_i$, de l'absorbant saturable $6_i$ et du filtre $7_i$, comme cela apparaîtra clairement à l'homme du métier. On peut aussi faire varier le nombre des amplificateurs, i.e. ne pas disposer un amplificateur sur chaque tronçon, ou en prévoir plus d'un par tronçon. De même, on peut faire varier, selon la nature de la liaison le nombre et la position des filtres et/ou des absorbants saturables.

La figure 2 montre schématiquement la puissance en fonction du temps des différents signaux solitons sur quatre canaux $\lambda_1$ à $\lambda_4$, à l'arrivée sur un absorbant saturable. Comme représenté sur la figure 2, et comme expliqué plus haut, les différents signaux présentent respectivement un décalage temporel relatif, et n'arrivent pas exactement au même moment sur l'absorbant saturable, du fait d'une part de la gigue affectant les différentes impulsions solitons, et d'autre part du jeu sur la contrainte de synchronicité des différents canaux.

La figure 3 montre la réponse en transmission d'un absorbant saturable, recevant les différents signaux solitons de la figure 2, avec en ordonnées la transmission et en abscisse le temps. L'absorbant saturable est choisi de sorte à présenter une fenêtre spectrale utile recouvrant les différentes longueurs d'onde du multiplex

La figure 4 montre l'effet sur les impulsions solitons de la figure 2 du passage à travers l'absorbant saturable de la figure 3. Comme on peut le voir sur la figure, la réponse de l'absorbant saturable représente un moyennage non-linéaire de toutes les impulsions présentes dans chacun des canaux, à différentes longueurs d'ondes. Le moyennage est non linéaire en ce qu'il dépend de la somme de toutes les puissances incidentes. Cet effet de moyennage induit dans l'absorbant saturable une enveloppe de modulation sensiblement centrée sur le temps bit, dont la gigue est sensiblement inférieure à celle des canaux, du fait de la distribution aléatoire ou quasi-aléatoire de la gigue sur les différents canaux. La modulation d'intensité induite par l'absorbant saturable sur chaque canal produit sur chaque canal un recentrage temporel des impulsions solitons . La perte de puissance produite par la non-synchronicité aléatoire, i.e. par la gigue, peut être compensée par le filtrage étroit ou guidant des impulsions solitons, du fait des propriétés intrinsèques des solitons, par un effet de contre-réaction bien connu.

Le filtrage peut être un filtrage guidant, notamment dans le cas d'un système à pente de dispersion compensée, dans la mesure où la dispersion est constante et où la synchronicité des différents canaux est conservée lors du décalage du filtre en peigne.

Le montage de la figure 1 assure ainsi la régénération des signaux solitons des différents canaux, simultanément, grâce aux absorbants saturables.

Dans un autre mode de réalisation de l'invention, on utilise pour la commande de l'absorbant saturable, une horloge impulsionnelle dont la porteuse se trouve en dehors de la bande occupée par les signaux du multiplex, mais dans la fenêtre spectrale utile de l'absorbant. Une telle horloge permet de rendre l'absorbant passant, dans une fenêtre centrée sur le temps bit, et ce quels que soient les signaux solitons reçus. Ceci est particulièrement avantageux si le nombre de canaux est faible, ou si la densité de 1 transmis est limitée.

On peut par exemple utiliser comme horloge un train de solitons non codé, dont la largeur est sensiblement comprise entre 0,20 et 0,33 fois le temps bit. Comme expliqué dans la demande de brevet 9612746 déposée le 21 Octobre 1996 au nom de Alcatel Alsthom Compagnie Générale d'Electricité. Dans un tel signal, les interactions entre solitons assurent une compensation de la gigue, de sorte que le signal se comporte comme une horloge.

Dans un tel cas, la puissance de crête de l'horloge ou du train de solitons est choisie de telle sorte à assurer un saturation complète ou quasi-complète de l'absorbant saturable pendant des périodes centrées sur les impulsions d'horloge. On peut ainsi, pour la régénération du signal, s'affranchir de la nature des signaux transmis. On obtient de la sorte une commande déportée de la modulation depuis l'émetteur 1.

On pourrait aussi émettre une telle horloge de modulation à partir du terminal de réception 2; cette configuration pourrait notamment être avantageuse s'il s'avère souhaitable de réduire les interactions entre l'horloge et les signaux WDM en cours de propagation. Dans cette configuration, les éventuels isolateurs en ligne pourraient être court-circuités à l'aide de coupleurs dichroïques ou d'autres dispositifs analogues, de façon similaire à ce qui se pratique pour l'amplification déportée, où une fibre annexe est utilisée pour transporter le signal de pompe jusqu'au segment de fibre dopée située en ligne.

Dans un troisième mode de réalisation, l'invention propose d'utiliser, au lieu des absorbants saturables $5_i$ de la figure 1, des amplificateurs à gain saturable (AGS), et par exemple des amplificateurs à semi-conducteurs qui présentent cette caractéristique. De tels amplificateurs à semiconducteurs, bien connus en soi de l'homme de l'art, sont indépendants de la polarisation du signal, fiables, et présentent en outre une dynamique de saturation rapide (moins d'une nanoseconde). On peut ainsi assurer des réponse rapides des régénérateurs, et un débit important sur chaque canal du multiplex.

La réponse de tels amplificateurs peut être commandée, depuis un terminal ou l'autre, comme, par une horloge faite de solitons noirs. Une telle horloge est décrite dans la demande de brevet 9612746 mentionnée plus haut, et est formée d'une suite ininterrompue de solitons noirs de largeur comprise entre 0,20 et 0,33 fois le temps bits.

Une telle horloge noire a pour effet de saturer le gain de l'amplificateur en dehors des périodes de réception des impulsions solitons, i.e. en dehors des impulsions d'horloge, de sorte à assurer une modulation synchrone en intensité des solitons du multiplex. L'utilisation d'amplificateurs à gain saturable et d'une telle horloge a l'avantage que l'horloge peut être transmise dans la partie de la fibre optique à dispersion normale, et donc en dehors de la fenêtre spectrale possible pour les signaux solitons.

Les différents modes de réalisation de l'invention présentent l'avantage d'assurer la régénération synchrone des solitons dans le système de transmission, en n'utilisant que des composants de ligne de type "passif", i. e. non commandés par un signal radiofréquence, de coût moindre et plus facilement qualifiables pour une utilisation sous-marine. L'invention évite les problèmes liés à la récupération locale des horloges, grâce à l'utilisation d'une horloge déportée, ou, dans le cas des absorbants saturables, sans horloge. L'invention rend économiquement possible un système de transmission avec un pas de régénération court, par exemple de l'ordre de 100 km, qui assure un contrôle efficace de la qualité de la transmission.

Bien entendu, la présente invention n'est pas limitée aux exemples et modes de réalisation décrits et représentés, mais elle est susceptible de nombreuses variantes accessibles à l'homme de l'art. Ainsi, même si ce n'est pas le mode de réalisation actuellement préféré, il est clair que d'autres types d'horloges que celles décrites plus haut peuvent être utilisés, comme par exemple une horloge obtenue à partir des signaux solitons d'un des différents canaux, par exemple à l'aide de moyens de récupération d'horloge, comme un oscillateur local commandé en tension avec une boucle de verrouillage de phase, ou tout autre moyen connu en soi. Le schéma d'allocation de longueurs d'onde n'est aucunement limité aux exemples décrits. Il faut aussi noter que l'on peut, par rapport aux modes de réalisation décrits, ajouter ou enlever des filtres ou des amplificateurs, en fonction des besoins. Enfin, l'invention a été décrite dans le cas d'une transmission monodirectionnelle. Elle s'applique à l'évidence à une transmission bidirectionnelle.

## Revendications

1. Système de transmission à fibre optique à signaux solitons et à multiplexage de longueur d'onde, caractérisé par le fait que les temps bit des différents canaux ($\lambda_1$ à $\lambda_n$) du multiplex sont sensiblement synchrones en au moins un point, avec au moins un absorbant saturable ($6_i$) disposé audit point.

2. Système de transmission selon la revendication 1, caractérisé en ce que la fenêtre spectrale utile de l'absorbant saturable recouvre les différents canaux du multiplex.

3. Système de transmission selon la revendication 1 ou 2, caractérisé en ce que le temps de réponse de l'absorbant saturable est inférieur à une petite fraction du temps bit, de préférence inférieur à 10% du temps bit.

4. Système de transmission selon la revendication 1, 2 ou 3, caractérisé en ce que les différentes longueurs d'ondes des canaux du multiplex sont choisies de sorte à assurer, sur un intervalle ($Z_R$) donné, un glissement relatif entre les différents canaux sensiblement égal à un multiple du temps bit (1/B), le système comprenant au moins deux absorbants saturables ($6_i$) séparés d'une distance multiple dudit intervalle ($Z_R$).

5. Un système de transmission selon la revendication 4, caractérisé en ce que pour toute longueur d'onde $\lambda_i$ du multiplex, la différence $\delta\tau_i$ entre le glissement par unité de longueur sur le canal i et sur le premier canal satisfait la relation

$$(k_i.T - T/4) < \delta\tau_i.Z_R < (k_i.T + T/4)$$

avec $k_i$ un entier dépendant du canal, et T le temps bit.

6. Système de transmission selon la revendication 1, 2 ou 3, caractérisé par des moyens de synchronisation à lignes à retard optiques, compensant les différences entre les temps de groupe associés aux différents canaux, de sorte à assurer la synchronicité des canaux au moins audit point.

**7.** Système de transmission selon l'une des revendications 1 à 6, caractérisé par des moyens d'émission ou de récupération dans le système de transmission d'une horloge, la puissance de l'horloge étant choisie de sorte à assurer une saturation complète ou quasi-complète dudit absorbant saturable ($6_i$) pendant les impulsions d'horloge.

**8.** Système de transmission selon la revendication 7, caractérisé en ce que l'horloge est formée d'une série périodique de solitons présentant chacun une largeur temporelle comprise entre 0,20 et 0,33 fois la période du signal.

**9.** Système de transmission selon l'une des revendications 1 à 6, caractérisé en ce que l'absorbant saturable comprend un amplificateur à gain saturable. de préférence un amplificateur à semi-conducteurs.

**10.** Système de transmission selon la revendication 9, caractérisé par des moyens d'émission ou de récupération dans le système de transmission d'une horloge noire, la puissance de l'horloge étant choisie de sorte à assurer une saturation complète ou quasi-complète du gain de l'amplificateur en dehors des impulsions d'horloge.

**11.** Système de transmission selon la revendication 10, caractérisé en ce que l'horloge noire est formée d'une série périodique de solitons noirs présentant chacun une largeur temporelle comprise entre 0,20 et 0,33 fois la période du signal.

**12.** Procédé de transmission dans un système à fibre optique à signaux solitons et à multiplexage de longueur d'onde, caractérisé par le fait que les temps bit des différents canaux ($\lambda_1$ à $\lambda_n$) du multiplex sont sensiblement synchrones en au moins un point, avec au moins une étape de modulation synchrone des signaux des canaux du multiplex à l'aide d'un absorbant saturable ($6_i$) disposé audit point.

**13.** Procédé de transmission selon la revendication 12, caractérisé en ce que la fenêtre spectrale utile de l'absorbant saturable ($6_i$) recouvre les différents canaux du multiplex.

**14.** Procédé de transmission selon la revendication 12 ou 13, caractérisé en ce que le temps de réponse de l'absorbant saturable est inférieur à une petite fraction du temps bit, de préférence inférieur à 10% du temps bit.

**15.** Procédé de transmission selon la revendication 12, 13 ou 14, caractérisé en ce que les différentes longueurs d'ondes des canaux du multiplex sont choisies de sorte à assurer, sur un intervalle ($Z_R$) donné, un glissement relatif entre les différents canaux sensiblement égal à un multiple du temps bit (1/B), et en ce qu'il comprenant au moins étapes de régénération à l'aide d'absorbants saturables séparés d'une distance multiple dudit intervalle ($Z_R$).

**16.** Procédé de transmission selon la revendication 15, caractérisé en ce que pour toute longueur d'onde $\lambda_i$ du multiplex, la différence $\delta\tau_i$ entre le glissement par unité de longueur sur le canal i et sur le premier canal satisfait la relation

$$(k_i.T - T/4) < \delta\tau_i.Z_R < (k_i.T + T/4)$$

avec $k_i$ un entier dépendant du canal, et T le temps bit.

**17.** Procédé de transmission selon la revendication 12, 13 ou 14, caractérisé en ce qu'il comprend au moins une étape de synchronisation des temps bit des différents canaux du multiplex, grâce à des moyens de synchronisation à lignes à retard optiques, compensant les différences entre les temps de groupe associés aux différents canaux.

**18.** Procédé de transmission selon l'une des revendications 12 à 17, caractérisé par l'émission ou la récupération dans le système de transmission d'une horloge, la puissance de l'horloge étant choisie de sorte à assurer une saturation complète ou quasi-complète dudit absorbant saturable pendant les impulsions d'horloge.

**19.** Procédé de transmission selon la revendication 18, caractérisé en ce que l'horloge est formée d'une série périodique de solitons présentant chacun une largeur temporelle comprise entre 0,20 et 0,33 fois la période du signal

**20.** Procédé de transmission selon l'une des revendications 12 à 17, caractérisé en ce que l'absorbant saturable comprend un amplificateur à gain saturable, de préférence un amplificateur à semi-conducteurs.

**21.** Procédé de transmission selon la revendication 20, caractérisé par l'émission ou la récupération dans le système de transmission d'une horloge noire, la puissance de l'horloge étant choisie de sorte à assurer une saturation complète ou quasi-complète du gain de l'amplificateur en dehors des impulsions d'horloge.

**22.** Procédé de transmission selon la revendication 21, caractérisé en ce que l'horloge noire est formée d'une série périodique de solitons noirs présentant chacun une largeur temporelle comprise entre 0,20 et 0,33 fois la période du signal.

**Patentansprüche**

1. Übertragungssystem mit optischer Faser für Solitonensignale und mit Wellenlängenmultiplex, dadurch gekennzeichnet, daß die Bitzeiten der verschiedenen Kanäle ($\lambda_1$ bis $\lambda_n$) des Multiplex an wenigstens einem Punkt im wesentlichen synchron sind, mit wenigstens einem an dem Punkt angeordneten sättigbaren Absorber ($6_i$).

2. Übertragungssystem nach Anspruch 1, dadurch gekennzeichnet, daß das nutzbare Spektralfenster des sättigbaren Absorbers die verschiedenen Kanäle des Multiplex abdeckt.

3. Übertragungssystem nach Anspruch 1 oder 2, dadurch gekennzeichnet, daß die Antwortzeit des sättigbaren Absorbers kleiner als ein kleiner Bruchteil der Bitzeit, vorzugsweise kleiner als 10 % der Bitzeit ist.

4. Übertragungssystem nach Anspruch 1, 2 oder 3, dadurch gekennzeichnet, daß die verschiedenen Wellenlängen der Kanäle des Multiplex so gewählt sind, daß auf einem gegebenen Intervall ($Z_R$) eine relative Verschiebung zwischen den verschiedenen Kanälen im wesentlichen gleich einem Mehrfachen der Bitzeit (1/B) gewährleistet ist, wobei das System wenigstens zwei sättigbare Absorber ($6_1$) umfaßt, die durch einen Abstand getrennt sind, der ein Mehrfaches des Intervalls ($Z_R$) ist.

5. Übertragungssystem nach Anspruch 4, dadurch gekennzeichnet, daß für jede Wellenlänge $\lambda_1$ des Multiplex die Differenz $\delta\tau_i$ zwischen der Verschiebung pro Längeneinheit auf dem Kanal i und auf dem ersten Kanal die Beziehung

$$(k_i.T-T/4) < \delta\tau_i.Z_R < (k_i.T+T/4)$$

erfüllt, wobei $k_i$ eine vom Kanal abhängige ganze Zahl und T die Bitzeit ist.

6. Übertragungssystem nach Anspruch 1, 2 oder 3, gekennzeichnet durch Synchronisationsmittel mit optischen Verzögerungsleitungen, die die Differenzen zwischen den den verschiedenen Kanälen zugeordneten Gruppenzeiten kompensieren, um die Synchronität der Kanäle an wenigstens dem einen Punkt zu gewährleisten.

7. Übertragungssystem nach einem der Ansprüche 1 bis 6, gekennzeichnet durch Mittel zum Senden oder Wiedergewinnen eines Taktes im Übertragungssystem, wobei die Leistung des Taktes so gewählt ist, daß eine vollständige oder quasi vollständige Sättigung des sättigbaren Absorbers ($6_1$) während der Taktimpulse gewährleistet ist.

8. Übertragungssystem nach Anspruch 7, dadurch gekennzeichnet, daß der Takt durch eine periodische Folge von Solitonen gebildet ist, die jeweils eine zeitliche Breite aufweisen, die zwischen dem 0,20-fachen und dem 0,33-fachen der Periode des Signals beträgt.

9. Übertragungssystem nach einem der Ansprüche 1 bis 6, dadurch gekennzeichnet, daß der sättigbare Absorber einen Verstärker mit sättigbarer Verstärkung, vorzugsweise einen Halbleiterverstärker umfaßt.

10. Übertragungssystem nach Anspruch 9, gekennzeichnet durch Mittel zum Senden oder Wiedergewinnen eines schwarzen Taktes in dem Übertragungssystem, wobei die Leistung des Taktes so gewählt ist, daß eine vollständige oder quasi vollständige Sättigung der Verstärkung des Verstärkers außerhalb der Taktimpulse gewährleistet ist.

11. Übertragungssystem nach Anspruch 10, dadurch gekennzeichnet, daß der schwarze Takt durch eine periodische Folge von schwarzen Solitonen gebildet ist, die jeweils eine zeitliche Breite aufweisen, die zwischen dem 0,20-fachen und dem 0,33-fachen der Periode des Signals beträgt.

12. Verfahren zur Übertragung in einem System mit optischer Faser für Solitonensignale und mit Wellenlängenmultiplex, dadurch gekennzeichnet, daß die Bitzeiten der verschiedenen Kanäle ($\lambda_1$ bis $\lambda_n$) des Multiplex an wenigstens einem Punkt im wesentlichen synchron sind, mit wenigstens einem Schritt der synchronen Modulation der Signale der Kanäle des Multiplex mit Hilfe eines an diesem Punkt angeordneten sättigbaren Absorbers ($6_i$).

13. Verfahren zur Übertragung nach Anspruch 12, dadurch gekennzeichnet, daß das nutzbare Spektralfenster des sättigbaren Absorbers ($6_i$) die verschiedenen Kanäle des Multiplex abdeckt.

14. Verfahren zur Übertragung nach Anspruch 12 oder 13, dadurch gekennzeichnet, daß die Antwortzeit des sättigbaren Absorbers kleiner als ein kleiner Bruchteil der Bitzeit, vorzugsweise kleiner als 10 % der Bitzeit ist.

15. Verfahren zur Übertragung nach Anspruch 12, 13 oder 14, dadurch gekennzeichnet, daß die verschiedenen Wellenlängen der Kanäle des Multiplex so gewählt sind, daß auf einem gegebenen Intervall ($Z_R$) eine relative Verschiebung zwischen den verschiedenen Kanälen im wesentlichen gleich einem Mehrfachen der Bitzeit (1/B) gewährleistet ist, und daß es wenigstens Regenerierungsschritte mit Hilfe von sättigbaren Absorbern umfaßt, die voneinander durch einen Abstand getrennt sind, der ein Mehrfaches des Intervalls ($Z_R$) ist.

16. Verfahren zur Übertragung nach Anspruch 15, dadurch gekennzeichnet, daß für jede Wellenlänge $\lambda_i$ des Multiplex die Differenz $\delta\tau_i$ zwischen der Verschiebung pro Längeneinheit auf dem Kanal i und auf dem ersten Kanal die Beziehung

$$(k_i.T-T/4) < \delta\tau_i.Z_R < (k_i.T+T/4)$$

erfüllt, wobei $k_i$ eine vom Kanal abhängige ganze Zahl und T die Bitzeit ist.

17. Verfahren zur Übertragung nach Anspruch 12, 13 oder 14, dadurch gekennzeichnet, daß es wenigstens einen Schritt der Synchronisierung der Bitzeiten der verschiedenen Kanäle des Multiplex mit Hilfe von Synchronisationsmitteln mit optischen Verzögerungsleitungen umfaßt, der die Differenzen zwischen den verschiedenen Kanälen zugeordneten Gruppenzeiten kompensiert.

18. Verfahren zur Übertragung nach einem der Ansprüche 12 bis 17, gekennzeichnet durch das Senden oder Wiedergewinnen eines Taktes in dem Übertragungssystem, wobei die Leistung des Taktes so gewählt ist, daß sie eine vollständige oder quasi vollständige Sättigung des sättigbaren Absorbers während der Taktimpulse gewährleistet.

19. Verfahren zur Übertragung nach Anspruch 18, dadurch gekennzeichnet, daß der Takt durch eine periodische Folge von Solitonen gebildet ist, die jeweils eine zeitliche Breite aufweisen, die zwischen dem 0,20-fachen und dem 0,33-fachen der Periode des Signals beträgt.

20. Verfahren zur Übertragung nach einem der Ansprüche 12 bis 17, dadurch gekennzeichnet, daß der sättigbare Absorber einen Verstärker mit sättigbarer Verstärkung, vorzugsweise einen Halbleiterverstärker umfaßt.

21. verfahren zur Übertragung nach Anspruch 20, gekennzeichnet durch das Senden oder Wiedergewinnen eines schwarzen Taktes in dem Übertragungssystem, wobei die Leistung des Taktes so gewählt ist, daß sie eine vollständige oder quasi vollständige Sättigung der Verstärkung des Verstärkers außerhalb der Taktimpulse gewährleistet.

22. Verfahren zur Übertragung nach Anspruch 21, dadurch gekennzeichnet, daß der schwarze Takt durch eine periodische Folge von schwarzen Solitonen gebildet ist, die jeweils eine zeitliche Breite aufweisen, die zwischen dem 0,20-fachen und dem 0,33-fachen der Signalperiode beträgt.

**Claims**

1. An optical fiber transmission system for soliton signals with wavelength multiplexing, the system being characterized by the fact that the bit times of the various channels $\lambda_1$ to $\lambda_n$ of the multiplex are substantially synchronous, at at least one point, with at least one saturable absorber ($6_i$) disposed at said point.

2. A transmission system according to claim 1, characterized in that the working spectrum window of the saturable absorber covers all of the channels of the multiplex.

3. A transmission system according to claim i or 2, characterized in that the response time of the saturable absorber is less than a small fraction of the bit time, and preferably less than 10% of the bit time.

4. A transmission system according to claim 1, 2, or 3, characterized in that the various wavelengths of the channels of the multiplex are selected so as to ensure relative slip between the various channels over a given interval $Z_R$ that is substantially equal to an integer multiple of the bit time 1/B, the system comprising at least two saturable absorbers ($6_i$) that are spaced apart by a distance that is an integer multiple of said interval $Z_R$.

5. A transmission system according to claim 4, characterized in that for each wavelength $\lambda_i$ of the multiplex, the difference $\delta\tau_i$ between the slip per unit length on the channel $\underline{i}$ and on the first channel satisfies the following relationship:

$$\left(k_i.T - \frac{T}{4}\right) < \delta\tau_i.Z_R < \left(k_i.T + \frac{T}{4}\right)$$

where $k_i$ is an integer depending on the channel, and T is the bit time.

6. A transmission system according to claim 1, 2, or 3, characterized by optical delay line synchronization means compensating the group time differences associated with the various channels so 'as to ensure that the channels are synchronous at least at said point.

7. A transmission system according to any one of claims i to 6, characterized by means for transmitting a clock or for recovering a clock in the transmission system, the power of the clock being selected so as to ensure that said saturable absorber ($6_i$) is completely or nearly completely saturated during the clock pulses.

8. A transmission system according to claim 7, characterized in that the clock is formed by a periodic series of solitons each having a time width lying in the range 0.20 times to 0.33 times the signal period.'

9. A transmission system according to any one of claims i to 6, characterized in that the saturable absorber comprises a saturable gain amplifier, preferably a semiconductor amplifier.

10. A transmission system according to claim 9, characterized by means for transmitting a black clock or means for recovering a black clock in the transmission system, the power of the black clock being selected so as to ensure that the gain of the amplifier is completely or nearly completely saturated outside clock pulses.

11. A transmission system according to claim 10, characterized in that the black clock is formed by a periodic series of black solitons each having a time width lying in the range 0.20 times to 0.33 times the signal period.

12. A transmission method in an optical fiber system for transmitting soliton signals with wavelength multiplexing, the method being characterized by the fact that the bit times of the various channels $\lambda_1$ to $\lambda_n$ of the multiplex are substantially synchronous at at least one point, with at least one step of synchronously modulating the signals of the multiplex channels by means of a saturable absorber ($6_i$) disposed at said point.

13. A transmission method according to claim 12, characterized in that the working spectrum window of the saturable absorber ($6_i$) covers all of the channels of the multiplex.

14. A transmission method according to claim 12 or 13, characterized in that the response time of the saturable absorber is less than a small fraction of the bit time, and preferably less than 10% of the bit time.

15. A transmission method according to claim 12, 13, or 14, characterized in that the various wavelengths of the channels of the multiplex are selected so as to ensure relative slip between the various channels over a given interval $Z_R$ substantially equal to an, integer multiple of the bit time 1/B, and in that it comprises at least steps of performing regeneration by means of saturable absorbers that are separated by distances that are integer multiples of said interval $Z_R$.

16. A transmission method according to claim 15, characterized in that for each wavelength $\lambda_i$ of the multiplex, the difference $\delta\tau_i$ between the slip per unit length on the channel $\underline{i}$ and on the first channel satisfies the following relationship:

$$\left(k_i.T - \frac{T}{4}\right) < \delta\tau_i.Z_R < \left(k_i.T + \frac{T}{4}\right)$$

where $k_i$ is an integer depending on the channel, and T is the bit time.

17. A transmission method according to claim 12, 13, or 14, characterized in that it includes at least one step of synchronizing the bit times of the various channels of the multiplex by optical delay line synchronization means compensating the group time differences associated with the various channels.

18. A transmission method according to any one of claims 12 to 17, characterized by transmitting a clock or recovering a clock in the transmission system, the power of the clock being selected so as to ensure that said saturable absorber is completely or nearly completely saturated during the clock pulses.

19. A transmission method according to claim 18, characterized in that the clock is formed by a periodic series of solitons each having a time width lying in the range 0.20 times to 0.33 times the signal period.

20. A transmission method according to any one of claims 12 to 17, characterized in that the saturable absorber comprises a saturable gain amplifier, preferably a semiconductor amplifier.

21. A transmission method according to claim 20, characterized by transmitting a black clock or recovering a black clock in the transmission system, the power of the black clock being selected so as to ensure that the gain of the amplifier is completely or nearly completely saturated outside the clock pulses.

22. A transmission method according to claim 21, characterized in that the black clock is formed by a periodic series of black solitons, each having a time width lying in the range 0.20 times to 0.33 times the signal period.

FIG_1

FIG_2

FIG_3

FIG_4

EP 0 883 256 B1